# EUROPÄISCHE PATENTANMELDUNG

(11) **EP 4 545 502 A1**
(43) Veröffentlichungstag der Anmeldung: **30.04.2025**
(21) Anmeldenummer: 23206460.0
(22) Anmeldetag: 27.10.2023
(51) Int. Cl.: C04B 28/04, C04B 28/08

(54) **ZEMENTMISCHUNG UND VERFAHREN ZU IHRER HERSTELLUNG**

(71) Anmelder: ThyssenKrupp Steel Europe AG, 47166 Duisburg (DE)
(72) Erfinder: Fabry, Matthias Jonas, 48147 Münster (DE); Schubert, Dr. Daniel, 47057 Duisburg (DE); Sommerfeld, Marcus, 47057 Duisburg (DE); Kohnen, Dr. Boris, 45968 Gladbeck (DE)
(74) Vertreter: ThyssenKrupp Steel Europe AG

(57) **Zusammenfassung**

Die Erfindung betrifft eine Zementmischung sowie ein Verfahren zur Herstellung einer Zementmischung.

## Beschreibung

Die Erfindung betrifft eine Zementmischung, sowie ein Verfahren zur Herstellung einer Zementmischung.

Die DE 10 2020 205 493 A1 offenbart ein Verfahren zur Einstellung einer gewünschten Basizität B3 der Flüssigschlacke in einem elektrischen Einschmelzer. Im Ergebnis steht eine granulierte Schlacke zur Verfügung, mit einer Zusammensetzung in Gew.-%:

| | |
|---|---|
| SiO₂: | zwischen 30 und 50 %; |
| CaO: | zwischen 25 und 50 %; |
| Al₂O₃: | zwischen 5 und 15 %; |
| MgO: | zwischen 2 und 15 %, |

sowie unvermeidbare Verunreinigungen ausgewählt aus der Gruppe, umfassend Eisen (Fe), MnO₂ und/oder Schwefel (S) und im speziellen in Gew.-%:

| | |
|---|---|
| SiO₂: | mit 45 %; |
| CaO: | mit 40 %; |
| Al₂O₃: | mit 8 %; |
| MgO: | mit 5 %, |

sowie unvermeidbare Verunreinigungen, umfassend Fe, MnO₂ und S von insgesamt kleiner 2.

In der DE 10 2021 204 258 A1 ist beschrieben, wie eine Schlacke in einem elektrischen Einschmelzer konditioniert werden kann, welcher für die Herstellung von mineralischen Baustoffen bereitgestellt werden kann. Bei einem Eisenanteil von weniger als 10 Gew.-% in der Schlacke ist eine Verwendung in der Zementindustrie vorteilhaft. Die beim Einschmelzen aus der Gangart von Eisenerzträgern hervorgehenden Schlacken weisen einen Anteil an CaO + MgO zwischen 10 und 30 % auf, während der Anteil an SiO₂ zwischen 30 und 70 % variiert und der Anteil an Fe₂O₃ und Al₂O₃ zwischen 5 und 55 % variiert. Über die Konditionierung wird eine Zusammensetzung ähnlich Hüttensand oder Portlandzement, vgl. Figur 4, angestrebt.

Portlandzement ist in der DIN EN 197-1 als CEM I gekennzeichnet, umfassend im Wesentlichen Portlandzementklinker. Portlandhüttenzement ist in der DIN EN 197-1 als CEM II, speziell die CEM II/A-S und /B-S, gekennzeichnet, welcher neben Portlandzementklinker als ersten Bestandteil auch je nach Zuordnung A-S oder B-S zwischen 6 und 35 % Hüttensand als zweiten Bestandteil umfasst. Hochofenzement ist in der DIN EN 197-1 als CEM III, speziell die CEM III/A, /B und /C, gekennzeichnet, welcher neben Portlandzementklinker als ersten Bestandteil auch je nach Zuordnung A, B oder C zwischen 36 und 95 % Hüttensand als zweiten Bestandteil umfasst.

Eine Reduzierung des CO₂-Fußabdrucks wird mittlerweile auch in der Zementindustrie angestrebt, um nachhaltige und/oder klimaschonende Produkte anbieten zu können (Dekarbonisierung von Zement und Beton). Es ist vorgesehen, den Einsatz von Stoffen enthaltend fossilen Kohlenstoff oder fossile Kohlenstoffverbindungen in der Prozesskette zu senken oder gänzlich zu vermeiden. Hierzu zählt im Wesentlichen der Verzicht auf den Einsatz von festen Stoffen, wie zum Beispiel Kohle etc., und/oder von gasförmigen Stoffen, wie zum Beispiel Erdgas etc. Des Weiteren ist auch denkbar, die Verwendung von Kalkstein und Dolomit sowie den Einsatz anderer Primärrohstoffe, wie zum Beispiel Sand, zu reduzieren.

Die Aufgabe besteht darin, eine Zementmischung bereitzustellen, deren CO₂-Fußabdruck geringer ist im Vergleich zu den bisher auf dem Markt geläufigen Zementmischungen sowie ein entsprechendes Verfahren zu ihrer Herstellung anzugeben.

Gelöst wird die Aufgabe mit einer Zementmischung nach Anspruch 1 und mit einem Verfahren zu ihrer Herstellung nach Anspruch 9. Weitere vorteilhafte Ausgestaltungen sind in den Unteransprüchen ausgeführt.

Die Erfindung betrifft gemäß einer ersten Lehre eine Zementmischung, umfassend oder bestehend aus einer ersten Zementgruppe und mindestens einer zweiten Zementgruppe, wobei die erste Zementgruppe aus den Bestandteilen in Gewichts-%:

| | |
|---|---|
| CaO: | 50 bis 70 %, |
| SiO₂: | 15 bis 30 %, |
| Al₂O₃: | 3 bis 17 %, |
| Fe₂O₃: | > 0 bis zu 5 % |

und Verunreinigungen in Summe zu 100 Gewichts-% besteht; und wobei die zweite Zementgruppe aus den Bestandteilen in Gewichts-%:

| | |
|---|---|
| CaO: | 40 bis 60 %, |
| SiO₂: | 25 bis 40 %, |
| Al₂O₃: | 8 bis 18 %, |
| MgO: | 3 bis 10 % |

und Verunreinigungen in Summe zu 100 Gewichts-% besteht, wobei die Zementgruppen sich in ihrer Zusammensetzung voneinander unterscheiden, wobei das Verhältnis der ersten Zementgruppe zur zweiten Zementgruppe zwischen 30:1 und 1:30 beträgt, wobei die erste Zementgruppe und/oder die mindestens zweite Zementgruppe aus einer granulierten Einschmelzerschlacke hergestellt ist.

Die Erfindung betrifft gemäß einer zweiten Lehre ein Verfahren zur Herstellung einer Zementmischung, umfassend die Schritte:
- Bereitstellen einer ersten Zementgruppe, bestehend aus den Bestandteilen in Gewichts-%:

| | |
|---|---|
| CaO: | 50 bis 70 %, |
| SiO₂: | 15 bis 30 %, |
| Al₂O₃: | 3 bis 17 %, |
| Fe₂O₃: | bis zu 5 % |

und Verunreinigungen in Summe zu 100 Gewichts-%;
- Bereitstellen einer zweiten Zementgruppe, bestehend aus den Bestandteilen in Gewichts-%:

| | |
|---|---|
| CaO: | 40 bis 60 %, |
| SiO₂: | 25 bis 40 %, |
| Al₂O₃: | 8 bis 18 %, |
| MgO: | 3 bis 10 % |

und Verunreinigungen in Summe zu 100 Gewichts-%, wobei sich die zweite Zementgruppe in ihrer Zusammensetzung von der ersten Zementgruppe unterscheidet;
- Mischen der ersten Zementgruppe mit der zweiten Zementgruppe in einem Verhältnis zwischen 30:1 und 1:30, wobei die erste Zementgruppe und/oder die mindestens zweite Zementgruppe aus einer granulierten Einschmelzerschlacke bereitgestellt wird.

Bereits bei der Roheisen-/Stahlherstellung kann der CO₂-Ausstoß von der konventionellen Hochofenroute auf neue Technologien, wie sie in den vorgenannten Schriften beschrieben sind, durch die Verwendung von alternativen Reduktionsmittel, wie zum Beispiel der Einsatz von "grün" erzeugtem Wasserstoff, gesenkt werden. Grün bedeutet beispielsweise, dass regenerative Energien zum Einsatz kommen, um vorzugsweise in einer Wasserelektrolyse Wasserstoff als Hauptprodukt und Sauerstoff als Nebenprodukt unter Einsatz von "grünem" Strom zu erzeugen. Je weniger fossiler Kohlenstoff bzw. fossile Kohlenstoffverbindungen zum Einsatz kommen, je niedriger der klimaschädigende Kohlenstoffdioxidausstoß, so dass die bei der Roheisen-/Stahlherstellung anfallende Schlacke im elektrischen Einschmelzer auch weniger mit fossilem Kohlenstoff(-verbindungen) belastet ist, so dass auch die Folgeprozesse zur Weiterverarbeitung der Einschmelzerschlacke von diesem positiven Effekt profitieren.

Die Verwendung von Eisenschwamm als eisenhaltige Einsatzstoffe zur Erzeugung einer Eisenschmelze in einem elektrischen Einschmelzer bringt auch schlackenbildende Bestandteile mit sich, welche im Eisenerzträger naturgemäß enthalten sind und nicht in einem vorausgegangenen Reduktionsprozess ausgetrieben werden können (Gangart). Ist die über den Eisenschwamm bereitgestellte Gangart nicht im gewünschten Zielkorridor, werden mithin weitere Schlackenbildner als zusätzliche Zusatzstoffe eingebracht, um eine weiterverarbeitungsfähige Einschmelzerschlacke erzeugen zu können. So werden bevorzugt Schlackenbildner zugegeben, wobei die Ermittlung der charakteristischen Größen in der Schlacke im festen Zustand dem Fachmann geläufig sind. Der Schlackenbildner umfasst mindestens eines oder mehrere der Elemente aus der Gruppe (CaO, MgO, SiO₂, Al₂O₃).

Die Ermittlung der Zusammensetzung der granulierten und optional gemahlenen Einschmelzerschlacke kann beispielsweise nach DIN EN ISO 12677:2013-02 "Chemische Analyse von feuerfesten Produkten mittels Röntgenfluoreszenz (RFA) - Fused Cast-Bead Methode" durchgeführt werden.

Die Flüssigschlacke wird abgestochen und mit einem dem Fachmann bekannten Verfahren granuliert. So macht sich die Erfindung die Tatsache zu Nutze, eine erste Zementgruppe und/oder mindestens eine zweite Zementgruppe, hergestellt aus einer granulierten Einschmelzerschlacke, zu einer Zementmischung zu mischen, insbesondere in Abhängigkeit von dem Verhältnis der ersten Zementgruppe zur zweiten Zementgruppe, um den Bausektor und die entsprechenden Bedarfe mit einem CO₂ reduzierten Zementmischung bedienen zu können.

Die granulierte Einschmelzerschlacke entstammt aus elektrisch betriebenen Einschmelzern. Der elektrische Einschmelzer ist bevorzugt ein Elektroofen der Gattung OSBF (Open Slag Bath Furnace). Hierzu zählen Elektroreduktionsöfen, vor allem SAF (Submerged Electric Arc Furnace), welche Schmelzöfen mit Lichtbogen-Widerstandserwärmung sind, die Lichtbögen zwischen der Elektrode und der Feststoff und/oder der Schlacke bilden oder welche den Feststoff und/oder die Schlacke mittels Joule-Effekt erwärmen. Beim SAF ist die Elektrode (bzw. sind die Elektroden, wenn mehrere vorhanden sind) in die Charge und/oder Schlacke eingetaucht. Je nach Funktionsprinzip/Betriebsweise können die Elektroreduktionsöfen als Wechselstrom-Lichtbogen-Reduktionsöfen (SAFac) oder Gleichstrom-Lichtbogen-Reduktionsöfen (SAFdc) ausgeführt sein.

Alternativ kann die granulierte Einschmelzerschlacke auch aus elektrisch betriebenen Einschmelzern mit direkter Lichtbogeneinwirkung entstammen, welche vom oben beschriebenen Funktionsprinzip/Betriebsweise abweichen, sogenannte EAF (Electric Arc Furnace), welche Lichtbögen zwischen der Elektrode und dem Schmelzgut bilden. Dies umfasst den Wechselstrom-Lichtbogen-Schmelzofen (EAFac), den Gleichstrom-Lichtbogen-Schmelzofen (EAFdc) und den Pfannenofen LF (Ladle Furnace).

Reicht der Grad der Granulation der ersten und/oder zweiten Zementgruppe nicht aus respektive liegt kein homogener Granulationsgrad vor, ist es selbstredend, dass ein Mahlen vor, während und/oder nach der Mischung der mindestens zwei Zementgruppen vorgesehen werden kann, um eine bestimmte Kornfraktion einzustellen, welches in einem Zementherstellungsprozess bekannt ist.

Unter Verunreinigungen sind Bestandteile zu verstehen, welche im Wesentlichen durch die Gangart des Eisenerzes geprägt sind, insbesondere je nach Abbaustätte auch variieren können, wobei sie bis zu 5,0 Gewichts-%, insbesondere bis zu 4,0 Gewichts-%, vorzugsweise bis zu 3,50 Gewichts-%, bevorzugt bis zu 5,0 Gewichts-%, besonders bevorzugt bis zu 2,5 Gewichts-%, weiter bevorzugt bis zu 2,0 Gewichts-% betragen (können). So können die Verunreinigungen in der ersten Zementgruppe mindestens eines oder mehrere der Elemente aus der Gruppe (TiO₂, Na₂0, MnO, K₂O, SO₃, Cr₂O₃, P₂O₅, CO₂, ...) enthalten oder daraus bestehen. So können die Verunreinigungen in der mindestens zweiten Zementgruppe mindestens eines oder mehrere der Elemente aus der Gruppe (FeO, TiO₂, Na₂0, MnO, K₂O, SO₃, Cr₂O₃, P₂O₅, CO₂, ...) enthalten oder daraus bestehen.

Entweder ist nur die erste Zementgruppe oder nur die zweite Zementgruppe aus einer granulierten und optional gemahlenen Einschmelzerschlacke hergestellt oder bevorzugt sind beide Zementgruppen jeweils aus einer granulierten und optional gemahlenen Einschmelzerschlacke hergestellt.

Die erste Zementgruppe kann den Bestandteil Fe₂O₃ mit einem Mindestgehalt von 0,2 Gewichts-%, insbesondere einem Mindestgehalt von 0,5 Gewichts-%, vorzugsweise einem Mindestgehalt von 1,0 Gewichts-%, bevorzugt einem Mindestgehalt von 1,5 Gewichts-%, besonders bevorzugt einem Mindestgehalt von 2,0 Gewichts-%, weiter bevorzugt einem Mindestgehalt von 2,5 Gewichts-% aufweisen.

Gemäß einer Ausgestaltung beträgt der Glasgehalt der ersten Zementgruppe und/oder der zweiten Zementgruppe mindestens 80 %, 85%, insbesondere mindestens 90 %, 92 %, vorzugsweise mindestens 94 %, 95 %, bevorzugt mindestens 96 %, 97 %. Der Glasgehalt kann mittels Röntgenbeugungsanalyse erfasst werden, s. DIN EN 13925-1:2003-07, "Zerstörungsfreie Prüfung - Röntgendiffraktometrie von polykristallinen und amorphen Materialien" - Teil 1: Allgemeine Grundlagen.

Gemäß einer Ausgestaltung beträgt die Schüttdichte, insbesondere die lose (eingefüllten) Schüttdichte, der ersten Zementgruppe und/oder der zweiten Zementgruppe maximal 1,25 g/cm³, insbesondere maximal 1,20 g/cm³, vorzugsweise maximal 1,15 g/cm³, bevorzugt maximal 1,10 g/cm³, besonders bevorzugt maximal 1,05 g/cm³. Die Schüttdichte ist > 0 g/cm³ und kann mindestens 0,75 g/cm³ betragen. Ermittelt werden kann die Schüttdichte nach DIN EN 1097-3:1998-06, "Prüfverfahren für mechanische und physikalische Eigenschaften von Gesteinskörnungen" - Teil 3: Bestimmung von Schüttdichte und Hohlraumgehalt.

Gemäß einer Ausgestaltung besteht die Zementmischung aus der ersten und zweiten Zementgruppe mit einem Mischungsverhältnis zwischen 30:1 und 3:1, insbesondere zwischen 25:1 und 3:1, vorzugsweise zwischen 20:1 und 3:1. Im Wesentlichen ist hier eine Zementmischung in Anlehnung an die CEM II erstrebenswert.

Insbesondere kann die Zementmischung mit vorhergehendem Mischungsverhältnis eine Festigkeit von mindestens 20 MPa nach 2 Tagen, von mindestens 38 MPa nach 7 Tagen, von mindestens 50 MPa nach 28 Tagen aufweisen.

Ermittelt werden kann die Festigkeit nach DIN EN 196-1:2016-11 "Prüfverfahren für Zement - Teil 1: Bestimmung der Festigkeit".

Gemäß einer alternativen Ausgestaltung besteht die Zementmischung aus der ersten und zweiten Zementgruppe mit einem Mischungsverhältnis zwischen 2,9:1 und 1:30, insbesondere zwischen 2,9:1 und 1:25, vorzugsweise zwischen 2,9:1 und 1:20. Im Wesentlichen ist hier eine Zementmischung in Anlehnung an die CEM III erstrebenswert.

Insbesondere kann die Zementmischung mit vorhergehendem Mischungsverhältnis eine Festigkeit von mindestens 22 MPa nach 2 Tagen, von mindestens 40 MPa nach 7 Tagen, von mindestens 52 MPa nach 28 Tagen aufweisen.

Bei Bedarf kann die Zementmischung insbesondere zum Erfüllen einer geforderten Festigkeit beispielsweise "feiner" gemahlen werden, oder bereits optional "fein" gemahlene erste und/oder zweite Zementgruppen zur Mischung verwendet werden, wobei ein durchschnittlicher Korn-Durchmesser d₅₀ der Zementmischung oder der ersten und/oder zweiten Zementgruppe zwischen 8 und 32 µm, insbesondere zwischen 9 und 30 µm, vorzugsweise zwischen 10 und 25 µm, bevorzugt zwischen 11 und 20 µm betragen kann, wobei d₅₀ nach ISO 13320:2020 "Analyse der Partikelgröße - Methoden der Laserbeugung" ermittelbar ist.

Alternativ oder zusätzlich können Mahlhilfsmittel der Zementmischung zugesetzt werden, um beispielsweise gewünschten Mahlgrad, Korngrößenverteilung und Mahleffizienz, wie insbesondere zuvor beschrieben, einstellen zu können. Die gängigen Mahlhilfsmittel sind dem Fachmann geläufig.

Alternativ oder zusätzlich können der Zementmischung weitere mineralische Stoffe wie zum Beispiel Sulfatträger (SO₃), insbesondere in Summe zwischen 0,1 und 10,0 Gewichts-%, hinzugefügt werden.

Nachfolgend wird die Erfindung anhand von Ausführungsbeispielen näher erläutert.

Folgende Zementgruppen wurden für Untersuchungen bereitgestellt:
- eine erste Zementgruppe, bestehend aus Portlandzement mit in Gewichts-%:

| | |
|---|---|
| CaO: | 62,1 %, |
| SiO₂: | 23,2 %, |
| Al₂O₃: | 8,4 %, |
| Fe₂O₃: | 3,8 %, |

Rest Verunreinigungen, wobei die (lose) Schüttdichte 1,30 g/cm³ betrug;
- eine erste Zementgruppe mit in Gewichts-%:

| | |
|---|---|
| CaO: | 64,7 %, |
| SiO₂: | 22,3 %, |
| Al₂O₃: | 7,7 %, |
| Fe₂O₃: | 4,1%, |

Rest Verunreinigungen aus einer agglomerierten Einschmelzerschlacke hergestellt, wobei die (lose) Schüttdichte 1,06 g/cm³ betrug;
- eine zweite Zementgruppe, bestehend aus Hüttensand aus einem Hochofenprozess stammend mit in Gewichts-%:

| | |
|---|---|
| CaO: | 43,7 %, |
| SiO₂: | 32,3 %, |
| Al₂O₃: | 11,7 %, |
| MgO: | 6,8 %, |

Rest Verunreinigungen, wobei die (lose) Schüttdichte 1,22 g/cm³ betrug;
- eine zweite Zementgruppe mit in Gewichts-%:

| | |
|---|---|
| CaO: | 43,1 %, |
| SiO₂: | 34,1 %, |
| Al₂O₃: | 13,4 %, |
| MgO: | 7,5 %, |

Rest Verunreinigungen aus einer agglomerierten Einschmelzerschlacke hergestellt, wobei die (lose) Schüttdichte 0,94 g/cm³ betrug.

Die einzelnen Zusammensetzungen der Zementgruppen wurden mittels RFA nach DIN EN ISO 12677:2013-02 analysiert. Die Schüttdichte wurde nach DIN EN 1097-3:1998-06 ermittelt.

Portlandzement und Hüttensand wurden zu einer Zementmischung I im Verhältnis 1:3 und zu einer Zementmischung II im Verhältnis 1:1 gemischt und anschließend gemahlen.

Die erste Zementgruppe und zweite Zementgruppe jeweils hergestellt aus granulierter Einschmelzerschlacke wurden zu einer Zementmischung III im Verhältnis 1:3 und zu einer Zementmischung IV im Verhältnis 1:1 gemischt und anschließend gemahlen. Die granulierte Einschmelzerschlacke wurde im Labormaßstab aus einem SAF abgezogen, in welchem Eisenschwamm, welcher zu 100 % mit "grünem" Wasserstoff reduziert wurde, erschmolzen wurde. Aus der Gangart des Eisenschwamms und einer gezielten Zugabe von Schlackenbildner wurden die erste und zweite Zementgruppe individuell mit der vorgenannten Zusammensetzung in zwei unterschiedlichen Schmelzbetrieben erzeugt.

Alle Zementmischungen I bis IV wurden mit einem Sulfatträger mit einem Gehalt von jeweils 4 Gewichts-% SO₃ gemischt.

**Tabelle 1**

| **Zementmischung** | I | II | III | IV |
|---|---|---|---|---|
| d₅₀ (ISO 13320) in µm | 14,9 | 14,6 | 14,4 | 14,8 |
| Glasanteil (DIN EN 13925) in % | > 92 | > 92 | > 92 | > 92 |
| Festigkeit (DIN EN 196-1) in MPa | | | | |
| nach 2 Tagen | 18,0 | 18,2 | 22,7 | 23,1 |
| nach 7 Tagen | 38,8 | 42,1 | 41,3 | 50,6 |
| nach 28 Tagen | 52,5 | 66 | 57,6 | 67,2 |

Die Ergebnisse der einzelnen Zementmischungen I bis IV sind in der Tabelle 1 aufgeführt. Die Erfindung stellt somit ein nicht nur hinsichtlich der physikalischen Eigenschaften vergleichbare respektive verbesserte Zementmischung zum bisherigen Stand der Technik zur Verfügung, sondern die Zementmischung ist auch klimaneutraler hergestellt worden, so dass ein Produkt mit geringem CO₂-Fußabdruck vermarktet werden kann.

## Patentansprüche

1. Zementmischung, umfassend oder bestehend aus einer ersten Zementgruppe und mindestens einer zweiten Zementgruppe, wobei die erste Zementgruppe aus den Bestandteilen in Gewichts-%:
| | |
|---|---|
| CaO: | 50 bis 70 %; |
| SiO₂: | 15 bis 30 %; |
| Al₂O₃: | 3 bis 17 %; |
| Fe₂O₃: | > 0 und bis zu 5 % |
und Verunreinigungen in Summe zu 100 Gewichts-% besteht, und wobei die zweite Zementgruppe aus den Bestandteilen in Gewichts-%:
| | |
|---|---|
| CaO: | 40 bis 60 %; |
| SiO₂: | 25 bis 40 %; |
| Al₂O₃: | 8 bis 18 %; |
| MgO: | 3 bis 10 % |
und Verunreinigungen in Summe zu 100 Gewichts-% besteht, wobei die Zementgruppen sich in ihrer Zusammensetzung voneinander unterscheiden, wobei die Zusammensetzung jeweils nach DIN EN 13925-1:2003-07 ermittelbar ist, wobei das Verhältnis der ersten Zementgruppe zur zweiten Zementgruppe zwischen 30:1 und 1:30 beträgt, **dadurch gekennzeichnet, dass** die erste Zementgruppe und/oder die mindestens zweite Zementgruppe aus einer granulierten Einschmelzerschlacke hergestellt ist.

2. Zementmischung nach Anspruch 1, wobei der Glasgehalt der ersten Zementgruppe und/oder der zweiten Zementgruppe mindestens 80 % beträgt, ermittelbar nach DIN EN 15925-1:2005-07.

3. Zementmischung nach einem der voranstehenden Ansprüche, wobei die Schüttdichte der ersten Zementgruppe und/oder der zweiten Zementgruppe maximal 1,25 g/cm³ beträgt, ermittelbar nach DIN EN 1097-3:1998-06.

4. Zementmischung nach einem der voranstehenden Ansprüche, wobei die Zementmischung aus der ersten und zweiten Zementgruppe mit einem Mischungsverhältnis zwischen 30:1 und 3:1 besteht.

5. Zementmischung nach Anspruch 4, wobei die Zementmischung mit vorhergehendem Mischungsverhältnis eine Festigkeit von mindestens 20 MPa nach 2 Tagen, von mindestens 38 MPa nach 7 Tagen, von mindestens 50 MPa nach 28 Tagen aufweist, ermittelbar nach DIN EN 196-1:2016-11.

6. Zementmischung nach einem der Ansprüche 1 bis 3, wobei die Zementmischung aus der ersten und zweiten Zementgruppe mit einem Mischungsverhältnis zwischen 2,9:1 und 1:30 besteht.

7. Zementmischung nach Anspruch 6, wobei die Zementmischung mit vorhergehendem Mischungsverhältnis eine Festigkeit von mindestens 22 MPa nach 2 Tagen, von mindestens 40 MPa nach 7 Tagen, von mindestens 52 MPa nach 28 Tagen aufweist, ermittelbar nach DIN EN 196-1:2016-11.

8. Zementmischung nach einem der voranstehenden Ansprüche, wobei die Zementmischung oder die ersten und/oder die zweiten Zementgruppe einen durchschnittlichen Korn-Durchmesser d₅₀ zwischen 8 und 32 µm aufweist, ermittelbar nach ISO 13320:2020.

9. Verfahren zur Herstellung einer Zementmischung umfassend die Schritte:
- Bereitstellen einer ersten Zementgruppe, bestehend aus den Bestandteilen in Gewichts-%:
| | |
|---|---|
| CaO: | 50 bis 70 %; |
| SiO₂: | 15 bis 30 %; |
| Al₂O₃: | 3 bis 17 %; |
| Fe₂O₃: | > 0 und bis zu 5 % |
und Verunreinigungen in Summe zu 100 Gewichts-%;
- Bereitstellen einer zweiten Zementgruppe, bestehend aus den Bestandteilen in Gewichts-%:
| | |
|---|---|
| CaO: | 40 bis 60 %; |
| SiO₂: | 25 bis 40 %; |
| Al₂O₃: | 8 bis 18 %; |
| MgO: | 3 bis 10 % |
und Verunreinigungen in Summe zu 100 Gewichts-%, wobei sich die zweite Zementgruppe in ihrer Zusammensetzung von der ersten Zementgruppe unterscheidet;
- Mischen der ersten Zementgruppe mit der zweiten Zementgruppe in einem Verhältnis zwischen 30:1 und 1:30,
**dadurch gekennzeichnet, dass** die erste Zementgruppe und/oder die mindestens zweite Zementgruppe aus einer granulierten Einschmelzerschlacke bereitgestellt wird.

10. Verfahren nach Anspruch 9, wobei eine Zementmischung in Anlehnung an die CEM II mit einem Mischungsverhältnis zwischen 30:1 und 3:1 aus der ersten und zweiten Zementgruppe hergestellt wird.

11. Verfahren nach Anspruch 9, wobei eine Zementmischung in Anlehnung an die CEM III mit einem Mischungsverhältnis zwischen 2,9:1 und 1:30 aus der ersten und zweiten Zementgruppe hergestellt wird.
